Europäisches Patentamt

European Patent Office

Office européen des brevets

(11) Publication number: **0 474 932 A1**

# EUROPEAN PATENT APPLICATION

(21) Application number: **90310017.0**

(22) Date of filing: **13.09.90**

(51) Int. Cl.5: **H04L 12/26**

(43) Date of publication of application:
**18.03.92 Bulletin 92/12**

(84) Designated Contracting States:
**DE FR GB**

(71) Applicant: **Hewlett-Packard Company**
**Mail Stop 20 B-O, 3000 Hanover Street**
**Palo Alto, California 94304(US)**

(72) Inventor: **I'Anson, Colin Stephen**
**1 Fabian Drive**
**Stoke Gifford, Bristol BS12 6XL(GB)**
Inventor: **McKee, Neil**
**27 Longmead Avenue**
**Horfield, Bristol(GB)**

(74) Representative: **Squibbs, Robert Francis et al**
**Hewlett-Packard Limited Cain Road**
**Bracknell, Berkshire RG12 1HN(GB)**

(54) **Network fault analyzer.**

(57) A protocol analyzer, for use in monitoring packet sequences passing through a data network, includes context filter means comprising storage means 18 having permanently stored therein a set of state sequences corresponding substantially to a protocol carried by the network, and means for detecting (17) and indicating (20) when the sequence of packets diverges from a valid sequence of the stored set. The packet types are passed through a FIFO store (16) as they are matched against the stored sequences of states, so that on a violation, the sequence of packet types leading up to the violation can be extracted from the FIFO store and displayed. The context (or behavioural) filter thus filters out packet sequences conforming to the system protocols, so that only packets violating those protocols are displayed.

An inverse mode can be provided in which only packet sequences conforming to the protocols are shown.

A modest degree of user programmability can be added, to allow the user to effectively "tweak" the protocol tables. Two levels of operation can also be provided, giving "strong" filtering detecting only strictly protocol-violating sequences, or "weak" filtering giving automatic detection of permitted but unusual sequences as well.

EP 0 474 932 A1

The present invention relates to the analysis of computer and like message networks (and, more generally, data networks) for operating faults.

A data network is a network (which may or may not include nodes performing switching functions) interconnecting a plurality of data processing devices. Such networks are often used to interconnect a number of computers, but can also be used for other data communication purposes, such as telephone-type networks.

Information is generally transmitted in the form of messages, and an individual message will often be divided into a number of discrete packets. In such a network, the routing of the packets may be at least partially controlled or determined by the various nodes in the network. In some cases, the route taken by the packets of a message is set up for a connection and all packets follow that route; in others, the various packets for a connection may follow different routes through the network. Usually, a number of packets of different connections will be interleaved on any particular link between two adjacent nodes in the network.

Such networks are liable to suffer from faults. The cause and/or effect of a fault may both be immediately evident. For example, the physical linkage between two nodes may be interrupted; or no packets may be received from a particular node. However, network faults are often subtle in both their causes and effects, and it may even not be clear whether there is a fault or not; for example, a poor response time of the network may be due to a fault or it may be due to an unusual and extreme workload imposed on it.

A variety of instruments are available for network fault diagnosis (using the term ‖diagnosis ‖in a broad sense). At the lowest level, there are voltage level testers, continuity testers, etc. At a slightly higher level, there are signal presence testers such as LED instruments. However, many network faults occur at a higher level, and their diagnosis requires inspection of the network at a higher level, involving the observation of packets and packet types. This can be achieved by means of protocol analyzers. A protocol analyzer is a basic tool for monitoring the operation of a data network, and is to a network broadly what an oscilloscope is to an analog system. (It will be realized that the use of a protocol analyzer is largely restricted to networks, or parts thereof, in which all packets follow the same path, at any rate at the location where the analyzer is attached.)

However, the use of protocol analyzers has two difficulties. One is that the setting up of the analyzer is a skilled task, requiring a long training and learning period before it can be used effectively. The other is that the output from the analyzer is generally in a form which is not directly intelligible, and requires considerable further analysis before its implications for the health of the network can be understood.

The object of the present invention is to provide an improved protocol analyzer which makes it easier to detect faults.

Considering the nature of the signals in a network more specifically, signals pass through the network in the form of packets. The packets are of a variety of types, and each type is generally identified by some of the initial bytes. The packets are the elements by which stations on the network communicate with each other. Communication sessions between two stations are made up of packets of particular types and in particular sequences termed protocols.

Table I shows a typical example of a normal protocol between two stations A and B, with station A sending data to station B. (It will be understood that the number of data packets in the sequence is variable.)

Table I

```
A  →  CR    →  B  (Connection Request)
A  ←  CC    ←  B  (Connection Confirm)
A  →  Data  →  B  (Data packet)
    . . .
A  →  Data  →  B  (Data packet)
A  →  DR    →  B  (Disconnect Request)
A  ←  DC    ←  B  (Disconnect Confirm)
```

In using a protocol analyzer, the analyzer is attached to a suitable point in the network. It detects packets, identifies their types, and produces a listing of the packets by type. By inspecting this listing, the operator can see the nature of the traffic at the point and recognize various kinds of errors. For example, a Data packet following a CR packet directly (without a CC packet in the other direction between them) is regarded as an error.

The simplest form of listing is a listing of all packets. However, analysis of such a "raw" listing is an onerous task. There will usually be a large variety of sets of packets passing any given point in the network, each set having a different source and/or destination station. Further, both the number and the complexity of the protocols used in a typical large system are large.

It has therefore become known to make the data collection by protocol analyzers "programmable". That is, the analyzer can be set by the user to respond only to conditions determined by the user. These conditions can be regarded as a filter which operates on the input data stream, and can be described as ⌐mask ⌐filtering.

The user can thereby select only packets passing between two selected stations (by setting the analyzer to respond only to packets with the appropriate source and destination codes). The user can also set the analyzer to respond only to certain sequences of packets (or, more precisely, packet types); obviously, the chosen sequences will usually be those indicative of errors or abnormal conditions. As just noted, however, the complexity of a protocol can often be high, and the number of protocols or variations thereof is also liable to be high. Thus programming the analyzer is an arduous task, and the user is quite likely to program it so as to detect only a limited number of "likely" abnormal conditions. (Such known protocol analyzers often also provide a continuous scrolling display of all packet types.)

According to the present invention there is provided a protocol analyzer, for use in monitoring packet sequences passing through a data network, including context filter means comprising storage means having permanently stored therein a set of state sequences corresponding substantially to a protocol carried by the network, and means for detecting and indicating when the sequence of packets monitored by the analyzer diverges from a valid sequence of the stored set.

The context filter (an alternative name is a behavioural filter) is a device which can be incorporated in an otherwise conventional protocol analyzer to filter out packet sequences conforming to the system protocols, so that only packets violating those protocols are displayed. Thus such faults are displayed by themselves, making them immediately evident (instead of the operator having to scan through the complete list of all packet types and try to pick out anomalous events for himself or herself).

An inverse mode can also be provided, showing only packet sequences conforming to the protocols, so that normal or background traffic can be inspected.

The behaviour of the protocols is equivalent to a finite state machine: a set of states and various permitted transitions between the states as determined by the different types of packets and the actions of the users of the protocol. The context filter preferably consists of a stored set of state and transition tables, plus means for matching or tracking the stored tables against the sequence of packet types which actually occurs. As long as the actual sequence conforms to the protocol definition, display is inhibited, but on a protocol violation, the packet type is displayed.

Obviously the complete sequence of all packets can be displayed, with those violating the protocol being indicated in a distinctive manner.

The context filter may include a FIFO store through which the packet types are passed as they are matched against the stored sequences of states, so that on a violation, the sequence of packet types leading up to the violation can be extracted from the FIFO store and displayed.

In its simplest form, the present analyzer is not programmable as far as type sequences are concerned, i.e. its functionality is limited to the inbuilt context filtering. However, the inbuilt context filtering can have a modest degree of programmability added to it, so that the user can superpose their own particular preferences as to sequences onto the sequences detected by the context filter. This can be provided in a form in which the user can detect sequences additional to those of the stored set, and/or in a form in which the user can inhibit the detection of selected sequences in the stored set. This will allow the user to "tweak" the inbuilt sequences if they so desire. A further option is to give the user the ability to turn off the context filter. (The conventional continuous scrolling display can also, of course, be included.)

A different elaboration of the basic principle is the provision of two levels of operation of the context filter. For this, the set of state sequences stored in the storage means will be subdivided into two subsets, one subset typically being sequences which occur in normal operation and the other being sequences which are permitted by the protocol but represent unusual situations. Operation at one level ("strong filtering") would result in the detection of only strictly protocol-violating sequences, while operation at the other ("weak filtering") would result in the automatic detection of the permitted but unusual sequences as well. The permitted but unusual sequences could of course be indicated in a manner distinguishing them from the strictly forbidden sequences.

A protocol analyzer including a context filter in accordance with the present invention will now be described, by way of example, with reference to the drawings, in which:

Fig. 1 is a block diagram of the analyzer;

Fig. 2 is a state and transition diagram; and

Fig. 3 is a more detailed block diagram of the protocol sequence store and matching unit of the analyzer.

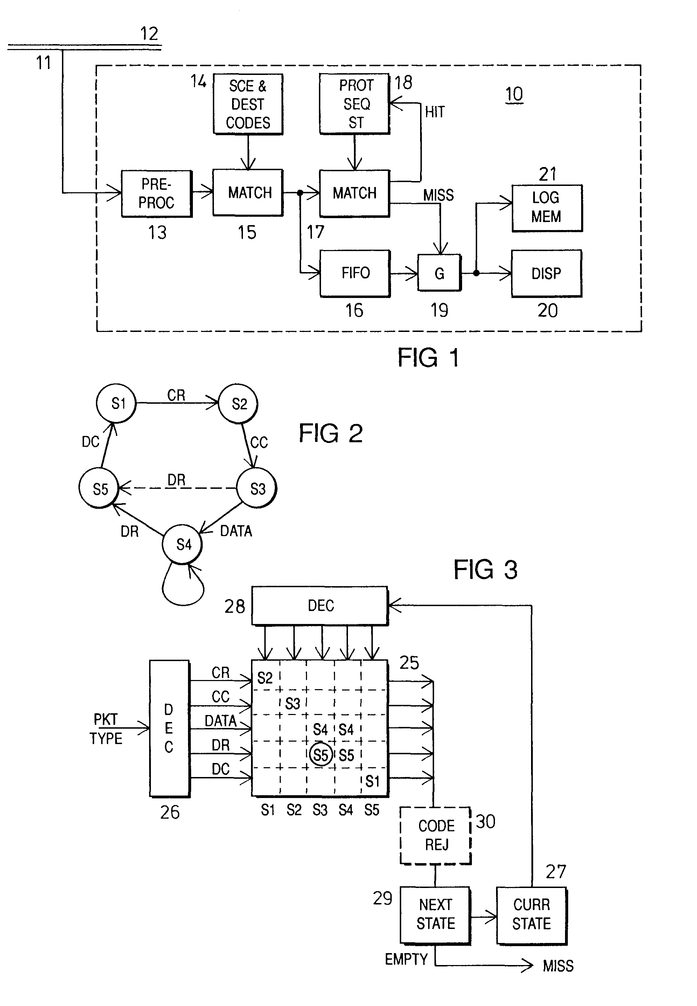

Referring to Fig. 1, the analyzer 10 is coupled at 11 to a channel 12 in the data network being monitored. (Obviously the analyzer can be attached instead to a node of the network.) The analyzer is thus fed with the packets passing along the channel 12.

Each packet on the channel 12 is picked off and fed to a pre-processing unit 13, which identifies and separates the various components of the packet, including in particular the source of the packet, its destination, and its type (e.g. CR or CC). The source and destination of the message (packet stream) to be monitored are set by the user in a store 14. The packet source and destination extracted by unit 13 are matched against the source and destination of the desired message stream from unit 14 by a match unit 15, which passes on the packet types of the packets of the desired message stream. The sequence of packet types passing through unit 15 is fed to a FIFO store 16.

The sequence of packet types passing through unit 15 is also fed to a match unit 17 which matches it against a protocol sequence stored in a protocol sequence store 18. On a miss, a gate 19 is enabled, allowing the sequence of packet types to pass to a display unit 20 and a log store 21. If there is a match, the state or output of the protocol sequence store 18 is updated to a new state which is dependent on the packet type coming from unit 15 and the current state of the store 18.

Type sequences violating the protocol are thus displayed to the user, and stored in unit 21 for later analysis if desired. The user can see not just the protocol-violating packet type but the whole sequence leading up to it, because on a protocol violation, that whole sequence is contained in the store 16. The gate 19 is of course kept enabled while the whole sequence passes through it.

Fig. 2 is an abstract state and transition diagram for the protocol described above. The protocol has five states, indicated in the diagram simply as S1 to S5, and described more fully in Table II.

Table II

| S1 | Idle/waiting |
|----|------------------------|
| S2 | Waiting to transmit |
| S3 | Ready to transmit |
| S4 | Data being transmitted |
| S5 | Waiting to close down |

(It will be realized that the transmitting station, the receiving station, and the protocol analyzer all effectively implement the state and transition diagram. However, the actions which a station may take in any particular state will usually be dependent on whether it is the transmitting or receiving station. The protocol serves to keep the current states of the two station matching, and the protocol analyzer uses the message types which is sees passing between the stations to "shadow" the states of the stations.)

Fig. 2 shows the various transitions permitted between these states, each transition being caused by a packet of the appropriate type. If, in any given state, a packet of a type not shown occurs, the protocol has been violated. It will be seen that the normal state sequence is cyclic, S1-S2-S3-S4-S5-S1, with the possibility of state S4 being repeated indefinitely. It will also be seen that a state transition from S3 direct to S5 is permitted, though this transition is abnormal because it is abnormal for a connection to be established and then terminated without the transmission of any data.

Fig. 3 is a block diagram of the protocol state table and matching means. These are shown as units 17 and 18 in Fig. 1, though the division into those two units is functional; as will be seen, the various components cannot readily be separated into two distinct units.

The protocol state table is stored in a matrix store 25. In this store, the columns represent the states (S1 to S5), and the rows represent the packet types (CR, CC, DATA, DR, and DC) which cause state transitions. For each possible transition (from a current state to a next state in response to a packet type), the table contains the next state code in the element at the intersection of the column for the current state and the row for the packet type. Thus the transition from state S3 induced by a packet type DATA is to state S4, and is stored by the code S4 in the element at the intersection of column S3 and row DATA.

The incoming packet type from unit 15 is fed to a row decoder 26 to select the appropriate row of the matrix 25. Also, the current state is stored in a current state store 27, and is passed to a state decoder 28 to select the appropriate column of the matrix 25. If the element so selected contains a state code, that code is read out and passed to a next state store 28. The fact that that element contains a state code indicates that the transition is a permitted one. If however the selected element does not contain a state code, the next state store 29 will remain empty. This condition is indicated by a signal on the line EMPTY, which is the line MISS of Fig. 1.

After the table has been read and the new state (if any) read into the next state store 29, the contents of the next state store 29 are transferred to the current state store 27 (so erasing its previous contents) in readiness for the reception of the next packet type.

The circled entry for state S3 and row DR is the permitted but abnormal transition mentioned above. If desired, this entry may have a distinguishing code attached to it, with the output of the matrix 25 being fed to the next state store 29 via a code rejection unit 30 which can be enabled or disabled. If disabled, the unit 30 will allow all state values to pass; if enabled, it will allow only state values without a distinguishing code to pass. This implements the strong and weak filtering option described above.

It should be noted that the state sequence in the above example has been designed for the purpose of illustrating typical types of state sequences, but is however somewhat artificial, since in practice, the two states S3 and S4 would not normally be distinct.

Obviously the simple arrangement described here would in practice be elaborated in various ways to take account of the greater complexity of actual protocols. If, for example, various different protocols were used by different terminals on the network being monitored, protocol recognition means could be provided to recognize which protocol was being used by any particular message stream (packet sequence) and to select the appropriate table from a set of protocol table stores.

Also, means may be provided whereby the user can enter and store selected transitions (i.e. selected packet type sequences), which are then inhibited from being recognized as violations, and/or suppress selected transitions, which are then treated as violations. This may be done by providing a user-modifiable matrix which is operated in parallel with the main protocol state table (matrix store 25).

The gate 19 can of course be arranged to allow all packet types emerging from the FIFO store 16 and merely add a distinguishing tag to protocol-violating packet types, with the display unit 20 displaying tagged packet types in a distinctive manner.

## Claims

1. A protocol analyzer, for use in monitoring packet sequences passing through a data network, including context filter means comprising storage means having permanently stored therein a set of state sequences corresponding substantially to a protocol carried by the network, and means for detecting and indicating when the sequence of packets monitored by the analyzer diverges from a valid sequence of the stored set.

2. A protocol analyzer according to claim 1 including means for showing only packet sequences conforming to the protocols.

3. A protocol analyzer according to either previous claim including means for showing the complete sequence of all packets, in a manner distinct from that used for indicating when the sequence of packets monitored by the analyzer diverges from a valid sequence of the stored set.

4. A protocol analyzer according to any previous claim including a FIFO store through which the packet types are passed as they are matched against the stored sequences of states, and means operative on a violation to extract from the FIFO store and display the sequence of packet types leading up to the violation.

5. A protocol analyzer according to any previous claim including means programmable by the user to modify the sequences detected by the context filter.

6. A protocol analyzer according to any previous claim wherein the set of state sequences stored in the storage means is subdivided into a plurality of subsets, and the context filter is settable to detect violations of desired subsets or combinations thereof.

FIG 1

FIG 2

FIG 3

European
Patent Office

EUROPEAN SEARCH
REPORT

Application Number

EP 90 31 0017

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 748 348   (T. THONG)<br>* Column 2, lines 11-60; column 3, line 10 - column 4, line 37; figures 1,2 *<br>– – – | 1,2 | H 04 L 12/26 |
| Y | COMPUTER DESIGN, vol. 23, no. 7, June 1984, pages 21-23, Littleton, Massachusetts, US; P. KILLMON: "Protocol analyzers take on functions to deal with network complexities"<br>* Page 22, middle column, line 5 - page 23, left-hand column, line 31 *<br>– – – | 1,2 | |
| A | EP-A-0 332 286   (HEWLETT-PACKARD)<br>* Page 4, lines 1-31 *<br>– – – | 1-6 | |
| A | EP-A-0 371 656   (TEKTRONIX)<br>* Page 2, line 49 - page 3, line 8; page 3, line 55 - page 4, line 24; page 4, lines 46-58; claims 1,2; figures 1-3 *<br>– – – | 1-6 | |
| A | AT<br>& T TECHNICAL JOURNAL, vol. 64, no. 10, December 1985, pages 2413-2433, New York, US; G.J. HOLZMANN: "Tracing protocols"<br>* Paragraph V *<br>– – – | 1-6 | TECHNICAL FIELDS SEARCHED (Int. Cl.5)<br><br>H 04 L<br>G 06 F |
| E | WO-A-9 014 725   (CONCORD COMMUNICATIONS)<br>* Page 10, line 9 - page 14, line 15; claim 1; figures 1-3 *<br>– – – – – | 1 | |

The present search report has been drawn up for all claims

| Place of search | Date of completion of search | Examiner |
|---|---|---|
| The Hague | 16 May 91 | CANOSA ARESTE C. |